Europäisches Patentamt

European Patent Office

Office européen des brevets

(19)

(11) Veröffentlichungsnummer: **0 016 863**
**B1**

(12) **EUROPÄISCHE PATENTSCHRIFT**

(45) Veröffentlichungstag der Patentschrift:
31.03.82

(51) Int. Cl.³: **C 09 C 1/58,** C 08 K 3/04,
C 08 L 21/00

(21) Anmeldenummer: 79104897.8

(22) Anmeldetag: 04.12.79

(54) Verfahren zur Herstellung von Mischgranulat aus Russ und hellem silikatischem Füllstoff und dieses Mischgranulat enthaltende Kautschukmischung.

(30) Priorität: 21.03.79 DE 2910991

(43) Veröffentlichungstag der Anmeldung:
15.10.80 Patentblatt 80/21

(45) Bekanntmachung des Hinweises auf die Patenterteilung:
31.03.82 Patentblatt 82/13

(84) Benannte Vertragsstaaten:
AT BE DE FR GB IT NL

(56) Entgegenhaltungen:
DE-A-1 592 861
FR-A-1 465 337
GB-A-729 381
US-A-3 390 006

(73) Patentinhaber: Degussa Aktiengesellschaft,
Weissfrauenstrasse 9, D-6000 Frankfurt am Main 1 (DE)

(72) Erfinder: Kreher, Alfons, Dr., Am Kappelgarten 19,
D-6000 Frankfurt (DE)
Erfinder: Kühner, Gerhard, Dr., Liesingstrasse 1,
D-6450 Hanau 9 (DE)
Erfinder: Rothbühr, Lothar, Dr., Volker-Strasse 10,
D-5030 Hürth (DE)
Erfinder: Türk, Günter, Dr., Liesingstrasse 3,
D-6450 Hanau 9 (DE)
Erfinder: Wolff, Siegfried, Weiherstrasse 28,
D-5303 Bornheim-Merten (DE)

### Verfahren zur Herstellung von Mischgranulat aus Ruß und hellem silikatischem Füllstoff und dieses Mischgranulat enthaltende Kautschukmischung

Die Erfindung betrifft ein Verfahren zur Herstellung von Mischgranulat aus Ruß und hellem silikatischem Füllstoff in einem Stachelschneckengranulator.

Ruß bzw. helle silikatische Füllstoffe werden zur Verstärkung von natürlichem oder synthetischem Kautschuk verwendet. Zur Vereinfachung der Zugabe zu Kautschukmischungen werden auch Gemische von Ruß und hellen Füllstoffen, sogenannte »Schwarz-Weiß-Mischungen« verwendet. Diese »Schwarz-Weiß-Mischungen« ergeben beispielsweise bei der Herstellung von Fahrzeugreifen gute gummitechnische Werte. Besonders gute gummitechnische Werte werden bei Gummiartikeln erhalten, welche einer dynamischen Beanspruchung unterliegen. Bei der Verwendung von Schwarz-Weiß-Mischungen ist es zudem möglich, einen hohen Füllungsgrad zu erzielen, wobei die Eigenschaften des gefüllten Polymeren je nach Mischungsverhältnis in gezielter Weise positiv beeinflußt werden können.

Gewisse Schwierigkeiten bereitet jedoch die Zugabe der beiden Füllstoffkomponenten in Form einer sogenannten Schwarz-Weiß-Mischung zur Kautschukmischung, weil während der Zugabe der Füllstoffkomponenten mit einem festen Mischungsverhältnis aus dem Vorratsbunker auf die Walze oder in den Kneter stets die Gefahr einer Entmischung und damit einer ungenauen Dosierung besteht.

Es ist bekannt zur besseren Handhabung und zur Vermeidung einer ungenauen Dosierung der Schwarz-Weiß-Mischung aus Ruß und hellem Füllstoff, Mischgranulat aus beiden Komponenten herzustellen, indem man trockenen, ungeperlten Ruß bis zur Bildung einer möglichst homogenen Masse in einen Filterkuchenteig eines gefällten Füllstoffes einmischt, unter Verwendung von Granuliervorrichtungen, wie z. B. Lochwalzen, Vollwalzen oder Trommelgranulatoren granuliert und trocknet (DE-B-1 146 606).

Dieses Verfahren weist jedoch den Nachteil auf, daß die erhaltenen Mischgranulate unregelmäßig geformt, relativ grobteilig, schlecht rieselfähig und damit ungenau dosierbar sind.

Das bekannte Verfahren gemäß DE-B-1 146 606 hat weiterhin den Nachteil, daß die Herstellung einer homogenen und definiert zusammengesetzten Mischung nur batchweise und unter erheblichem Aufwand an Apparaten und Energie möglich ist, weil der mit Ruß zu mischende, wasserhaltige Filterkuchenteig des gefällten Füllstoffes in der Filterpresse in Form unregelmäßig geformter, großteiliger Schollen anfällt. Die eigentliche Granulierung kann anschließend erst in einem zweiten Schritt durchgeführt werden.

Aus der DE-A-1 592 861 ist ein Verfahren bekannt, mit welchem pulverförmiger Ruß und luftgetrocknete, pulverförmige, gefällte Kieselsäure mit Wasser, welches noch ein Klebemittel enthält, in einer speziellen Vorrichtung naßverperlt und anschließend das gebildete Granulat getrocknet.

Nachteile des bekannten Verfahrens ergeben sich daraus, daß nur eine chargenweise Granulierung in speziellen Apparaturen möglich und darüber hinaus eine teilweise doppelte Trocknung der Kieselsäure notwendig ist. Aus der DE-A-1 592 861 ist ein weiteres Verfahren bekannt, welches einen Stachelschneckengranulator verwendet.

Hierzu wird jedoch in der DE-A-1 592 861 ausgeführt, daß der zur Herstellung von Rußperlen üblicherweise verwendete Stachelschneckengranulator zur Herstellung von Mischgranulaten nicht geeignet sei.

Es besteht daher ein Bedürfnis, ein regelmäßig geformtes perlförmiges und gut rieselfähiges und damit gut dosierbares Mischgranulat nach einem kontinuierlichen, energiesparenden Verfahren mit bekannten Vorrichtungen herzustellen.

Gegenstand der Erfindung ist ein Verfahren zur Herstellung von Mischgranulat aus Ruß und hellem silikatischem Füllstoff mittels eines Stachelschneckengranulators, welches dadurch gekennzeichnet ist, daß man den hellen silikatischen Füllstoff in Form einer wäßrigen Dispersion kontinuierlich in dem Stachelschneckengranulator auf kontinuierlich zugeführten Ruß aufsprüht, diese Mischung gleichzeitig verperlt und das so erhaltene Mischgranulat trocknet.

Als heller silikatischer Füllstoff kann aus Alkalisilikat durch Umsetzung mit Säure gefällte Kieselsäure verwendet werden. Diese kann z. B. nach dem Trocknen zur Herstellung einer wäßrigen Dispersion in Wasser redispergiert werden.

In einer bevorzugten Ausführungsform kann die wäßrige Dispersion der gefällten Kieselsäure aus dem Filterkuchen der gefällten Kieselsäure mittels dem aus der DE-C-2 447 613 bekannten Verfahren hergestellt werden.

Als helle silikatische Füllstoffe können neben gefällten Kieselsäuren auch andere silikatische Füllstoffe natürlicher oder synthetischer Provenienz verwendet werden.

Verwendbare natürliche silikatische Füllstoffe sind z. B. Kaolinite, Clays, Kieselkreiden, modifizierte mineralische Füllstoffe, Zeolithe u. a.

Verwendbare synthetische silikatische Füllstoffe sind außer gefällter Kieselsäure amorphe gefällte Calcium-, Aluminium- oder Magnesiumsilikate sowie Zeolithe vom Typ A, X, Y, P oder Sodalith.

Der Feststoffgehalt der Füllstoffdispersion kann zwischen 0,5 und 60 Gew.-% liegen.

Als Ruß können alle bekannten Rußtypen (vgl. Ullmanns Enzyklopädie der technischen Chemie, 3.

**0 016 863**

Auflage, 14. Band, Seite 793 ff. (1963)) verwendet werden.

Als Stachelschneckengranulator können alle als Verperlungsmaschinen bekannten Vorrichtungen vom Typ Stachelschneckenverperler verwendet werden. So kann man beispielsweise Rußperlmaschinen verwenden, wie sie in der DE-C-2 147 503 oder DE-C-1 081 167 beschrieben werden.

Die Vorteile des erfindungsgemäßen Verfahrens liegen in der kontinuierlichen Verfahrensführung, wobei die an sich bekannten Stachelschneckengranulatoren ohne zusätzliche Umbauten dafür einsetzbar sind.

Weitere Vorteile ergeben sich daraus, daß Vermischung und Verperlung in einem Verfahrensschritt vorgenommen werden können, wobei vorteilhafterweise die bei der Füllstoffherstellung als Zwischenprodukt anfallende wäßrige Dispersion direkt eingesetzt werden kann.

Hierdurch kann man zusätzlich Energie einsparen, weil ein aufwendiger Trocknungsschritt entfällt.

Die erhaltenen Mischgranulate sind gleichmäßig geformt und wegen ihres perlartigen Charakters sehr gut rieselfähig. Sie lassen sich gut dosieren und ausgezeichnet in Kautschukmischungen einarbeiten bzw. dispergieren. Außerdem sind sie bei Anwendung der bevorzugten Ausführungsform des erfindungsgemäßen Verfahrens gemäß DE-C-2 447 613 besonders gritarm.

Die erfindungsgemäßen Mischgranulate sind staubarm und weisen einen niedrigen Perlabrieb auf. Sie sind in Hinblick auf ihre Zusammensetzung definiert und entmischen sich nicht bei der Zugabe.

Das erfindungsgemäße Verfahren wird anhand der folgenden Beispiele näher erläutert und beschrieben:

Beispiel 1

In diesem Beispiel werden eingesetzt:
Ruß, mit den folgenden physikalisch-chemischen Kenndaten:

| | |
|---|---|
| Elektronenmikroskopischer Teilchendurchmesser, nm | 27 |
| BET-Oberfläche DIN 66 132, m$^2$/g | 80 |
| DBP-Zahl nach ASTM D 2414, ml/100 g | 130 |
| pH-Wert DIN 53 200 | 9,5 |
| Wassergehalt DIN 53 198, % | 1,0 |

Kieselsäure mit den folgenden physikalisch-chemischen Kenndaten (ermittelt nach Trocknung aus Filterkuchen):

| | |
|---|---|
| BET-Oberfläche DIN 66 132, m$^2$/g | 150 |
| Leitfähigkeit der 4,5%igen Dispersion, $\mu$ Siemens | 1000 |
| pH-Wert DIN 53 200 | 6,3 |
| Wassergehalt DIN 53 198, % | 5,0 |

Aus dem Filterkuchen dieses Kieselsäurefüllstoffes wird eine dünnflüssige Dispersion mittels des in der DE-C-2 447 613 beschriebenen Verfahrens hergestellt. Der Feststoffgehalt dieser Dispersion beträgt 20 Gew.-% und der pH-Wert 2,9.

Es wird ein waagerecht liegender Stachelschneckengranulator (Perlmaschine), welcher mit einer Stachelwalze in der Achse ausgerüstet ist, zur Herstellung des Mischgranulates verwendet. Die Gesamtlänge des Stachelschneckengranulators beträgt 1600 mm, die wirksame Länge 1080 mm (vom Punkt der Wassereinspritzung bzw. Dispersionseinspritzung bis zum Ausfall aus dem Perltrog). Der Innendurchmesser des Stachelschneckengranulators beträgt 200 mm. Die Drehzahl wird auf 750 UpM eingestellt.

25 kg/h Ruß werden kontinuierlich mittels einer regelbaren Schnecke in den Stachelschneckengranulator eingetragen, 65 kg/h der Kieselsäuredispersion auf den Ruß aufgesprüht und die Verperlung durchgeführt. Der Vordruck an der Sprühdüse beträgt 8 bar. Die so erhaltenen nassen Perlen werden getrocknet. Die Mischgranulatperlen weisen die folgenden physikalisch-chemischen Kenndaten auf:

| | |
|---|---|
| DBP-Zahl ASTM D 2414, ml/100 g | 141 |
| pH-Wert DIN 53 200 | 6,0 |
| Schüttgewicht DIN 53 600, g/l | 318 |
| Einzelperlhärte 1,5 mm Perlen, g | 13 |
| Aschegehalt DIN 53 586, % | 34,5 |

| Siebanalyse der Perlen | |
|---|---|
| > 2,0 mm, % | 0,4 |
| 1,0 – 2,0 mm, % | 21,8 |
| 0,7 – 1,0 mm, % | 17,8 |
| 0,5 – 0,7 mm, % | 18,6 |

3

| | |
|---|---|
| 0,25 – 0,5 mm, % | 24,8 |
| 0,125 – 0,25 mm, % | 11,6 |
| <0,125 mm, % | 5,0 |

Die Mischgranulatperlen weisen eine ausgezeichnete Rieselfähigkeit auf. Die Perlen sind weitgehend kugelförmig. Sie können gut in Polymermischungen eingearbeitet und dispergiert werden.

Die Messung der Einzelperlhärte wird wie folgt durchgeführt:

Das perlförmige Granulat wird durch zwei Siebe mit 1,4 und 1,6 mm lichter Maschenweite gesiebt. Die auf dem 1,4-mm-Sieb zurückbleibenden Perlen werden nochmals auf einem 1,5-mm-Sieb gesiebt. Die gerade in den Maschen steckenden Perlen, welche exakt 1,5 mm Durchmesser haben, werden für die Untersuchung der Einzelperlhärte verwendet. Dazu werden diese Perlen einzeln auf die Schale einer elektronischen Waage gelegt und mit einem Vorschub von ca. 1 mm/min durch einen Druckgeber belastet. Die elektronische Waage registriert in einem Strichdiagramm die Gewichtsbelastung. Bei dem Bruch der Perle tritt eine Entlastung ein, der Druckgeber wird hochgefahren und die Einzelperlhärte in Gramm aus dem Strichdiagramm abgelesen. Als Meßwert wird der Mittelwert aus 20 Messungen angegeben.

Beispiel 2

Es wird ein Ruß mit den physikalisch-chemischen Kenndaten gemäß Beispiel 1 verwendet. Als Kieselsäuredispersion wird die Dispersion gemäß Beispiel 1 verwendet. Es wird der in Beispiel 1 beschriebene Stachelschneckengranulator benutzt. Die Drehzahl der Stachelwelle beträgt 750 UpM. Mit einer regelbaren Schnecke werden 30 kg/h Ruß kontinuierlich in den Stachelschneckengranulator eingetragen. 60 kg/h der Kieselsäuredispersion werden durch eine Düse auf den Ruß aufgesprüht. Der Vordruck an der Sprühdose beträgt 8 bar. Nach Austrag der nassen Perlen aus der Perlmaschine werden diese getrocknet. An dem getrockneten Mischgranulat werden folgende Prüfwerte ermittelt:

| | |
|---|---|
| DBP-Zahl ASTM D 2414, ml/100 g | 131 |
| pH-Wert DIN 53 200 | 6,6 |
| Schüttgewicht DIN 53 600, g/l | 404 |
| Einzelperlhärte, g | 19 |
| Aschegehalt DIN 53 586, % | 27,1 |

| Siebanalyse der Perlen | |
|---|---|
| >2 mm, % | 30,6 |
| 1,0 – 2,0 mm, % | 46,8 |
| 0,7 – 1,0 mm, % | 10,0 |
| 0,5 – 0,7 mm, % | 6,4 |
| 0,25 – 0,5 mm, % | 4,8 |
| 0,125 – 0,25 mm, % | 0,6 |
| <0,125 mm, % | 0,6 |

Beispiel 3

In diesem Beispiel wird ein Ruß benutzt, der deutlich grobteiliger war als der in Beispiel 1 und 2 eingesetzte Ruß.

Der hier verwendete Ruß hat die folgenden physikalisch-chemischen Kenndaten:

| | |
|---|---|
| Elektronenmikroskopischer Teilchendurchmesser, mm | 45 |
| BET-Oberfläche DIN 66 132, m²/g | 36 |
| DBP-Zahl ASTM D 2414, ml/100 g | 122 |
| pH-Wert DIN 53 200 | 8,5 |

Die eingesetzte Kieselsäure hat die folgenden an der Trockensubstanz gemessenen physikalisch-chemischen Kenndaten:

| | |
|---|---|
| BET-Oberfläche DIN 66 132, m²/g | 150 |
| Leitfähigkeit der 4,5%igen Dispersion in Wasser, μ S | 1000 |
| pH-Wert DIN 53 200 | 6,3 |

Aus dem Filterkuchen dieses Kieselsäurefüllstoffes wird eine dünnflüssige Dispersion mit 20% Feststoffgehalt, wie in Beispiel 1 beschrieben, hergestellt. In den in Beispiel 1 beschriebenen Stachelschneckengranulator werden kontinuierlich 25 kg/h Ruß eingetragen, 62 kg/h der Kieselsäuredispersion auf den Ruß aufgesprüht und die Verperlung durchgeführt. Der Vordruck an der Sprühdose beträgt dabei 7 bar. Die so erhaltenen Naßperlen werden bei ca. 150°C getrocknet. Die Mischgranulatperlen haben die folgenden physikalisch-chemischen Kenndaten:

| | |
|---|---|
| Aschegehalt DIN 53 586, % | 31,9 |
| pH-Wert DIN 53 200 | 5,9 |
| Schüttgewicht DIN 53 600, g/l | 336 |
| Einzelperlhärte, g | 12,4 |

| Siebanalyse der Perlen | |
|---|---|
| >2 mm, % | 8,0 |
| 1,0 – 2,0 mm, % | 24,5 |
| 0,7 – 1,0 mm, % | 38,0 |
| 0,5 – 0,7 mm, % | 15,0 |
| 0,25 – 0,5 mm, % | 8,0 |
| 0,125 – 0,25 mm, % | 4,5 |
| <0,125 mm, % | 2,0 |

Beispiel 4

Es wird der Ruß gemäß Beispiel 1 verwendet. Zur Erreichung verschiedener Mischungsverhältnisse/Ruß-Kieselsäurefüllstoff werden Dispersionen mit verschiedenen Feststoffgehalten eingesetzt. Es wird dabei die Kieselsäure gemäß Beispiel 1 verwendet. Die daraus hergestellten Dispersionen haben die folgenden Eigenschaften:

| | Feststoff-gehalt | pH-Wert |
|---|---|---|
| Dispersion 1 | 10,5 | 4,3 |
| Dispersion 2 | 15,6 | 3,1 |
| Dispersion 3 | 19,5 | 2,9 |
| Dispersion 4 | 25,0 | 2,5 |

25 kg/h Ruß werden durch eine Schnecke in den Stachelschneckengranulator gemäß Beispiel 1 eindosiert. Über eine Sprühdüse wird so viel Dispersion zudosiert, bis gute Perlen entstehen. Bei Dispersion 1 werden benötigt: 38,0 kg/h, bei der Dispersion 2 werden benötigt: 50,0 kg/h, bei der Dispersion 3 werden benötigt: 60,0 kg/h und bei der Dispersion 4 75,0 kg/h. Die Drehzahl der Stachelschnecke beträgt 750 UpM.

Es ist leicht zu erkennen, daß für die gleiche Rußmenge eine um so größere Menge an Dispersion eingesetzt werden muß, je höher der Feststoffgehalt der Dispersion ist. Dies ist durch den absinkenden Wassergehalt der Dispersion zu erklären. Nach der Trocknung der Mischgranulatperlen werden an den hergestellten Produkten folgende Prüfwerte festgestellt:

0 016 863

| Ausgangsdispersion | Disp. 1 | Disp. 2 | Disp. 3 | Disp. 4 |
|---|---|---|---|---|
| | 10,5% | 15,6% | 19,5% | 25% |
| DBP-Zahl, ml/100 g | 130 | 127 | 141 | 148 |
| pH-Wert | 6,9 | 7,0 | 5,0 | 5,4 |
| Schüttgewicht, g/l | 332 | 332 | 328 | 308 |
| Einzelperlhärte, g | 16 | 17 | 16 | 25 |
| Aschegehalt, % | 13,6 | 23,6 | 32,1 | 42,5 |
| Siebanalyse der Perlen | | | | |
| 2 mm, % | 10,0 | 26,6 | 10,0 | 15,0 |
| 1,0—2,0 mm, % | 34,8 | 38,2 | 28,0 | 41,0 |
| 0,7—1,0 mm, % | 14,6 | 12,6 | 20,4 | 17,0 |
| 0,5—0,7 mm, % | 12,0 | 8,2 | 17,0 | 11,0 |
| 0,25—0,5 mm, % | 15,8 | 8,0 | 15,6 | 10,4 |
| 0,125—0,25 mm, % | 5,0 | 2,4 | 4,4 | 3,0 |
| 0,125 mm, % | 7,8 | 4,0 | 4,6 | 2,6 |
| | 100,0 | 100,0 | 100,0 | 100,0 |

Alle Mischgranulate haben kugelförmige Gestalt und sind hervorragend rieselfähig. Sie sind gut in Kautschukmischungen dispergierbar.

Aus diesem Beispiel ist zu entnehmen, daß durch Verwendung von Kieselsäure-Dispersionen mit unterschiedlichem Feststoffgehalt ein weites Spektrum der Zusammensetzung von Mischgranulaten aus gefällter Kieselsäure und Ruß hergestellt werden kann.

## Beispiel 5

Es wird ein Ruß mit den folgenden physikalisch-chemischen Kenndaten eingesetzt:

| | |
|---|---|
| Elektronenmikroskopischer Teilchendurchmesser, nm | 27 |
| BET-Oberfläche DIN 66 132, m²/g | 80 |
| DBP-Zahl nach ASTM D 2414, ml/100 g | 110 |
| pH-Wert DIN 53 200 | 9,5 |
| Wassergehalt DIN 53 198, % | 1,0 |

Als heller Füllstoff wird ein Natriumaluminiumsilikat mit den folgenden Kenndaten

| | |
|---|---|
| Mittlere Teilchengröße, μm | 4 |
| pH-Wert DIN 53 200 | 11,5 |
| Schüttgewicht DIN 53 600, g/l | 400 |

verwendet.

Dieses Natriumaluminiumsilikat wird einerseits als wäßrige Dispersion mit ca. 48% Feststoffgehalt ohne weitere Zusätze (A) und andererseits als 48%ige Dispersion mit einem Zusatz von 1,5% Talgalkohol (B) als Sedimentationsverzögerer eingesetzt.

In den in Beispiel 1 beschriebenen Stachelperlengranulator werden 25 kg/h Ruß kontinuierlich eingetragen und 77,5 kg/h der Dispersion A bei einem Sprühdruck von 6,5 bar auf den Ruß aufgesprüht. Die Drehzahl beträgt 750 UpM.

Der gleiche Versuch wird mit der Dispersion B ausgeführt.

6

Die nassen Perlen werden getrocknet.

Die entstandenen Mischgranulate weisen eine Zusammensetzung von 40% Ruß und 60% Natriumaluminiumsilikat und die folgenden physikalisch-chemischen Kenndaten auf:

|  | Jod-adsorption nach DIN 53 582 | Asche-gehalt bei 800°C DIN D 53 586 | pH-Wert DIN 53 200 | Schütt-gewicht DIN 53 600 |
|---|---|---|---|---|
|  | mg/g | % |  | g/l |
| Mischgranulat aus Dispersion A | 31 | 55,4 | 11,0 | 500 |
| Mischgranulat aus Dispersion B | 35 | 55,2 | 10,8 | 516 |

Die Mischgranulate weisen eine ausgezeichnete Rieselfähigkeit auf.

## Beispiel 6

Es wird ein Ruß mit den folgenden physikalisch-chemischen Kenndaten verwendet:

| | |
|---|---|
| Elektronenmikroskopischer Teilchendurchmesser, nm | 50 |
| BET-Oberfläche DIN 66 132, $m^2$/g | 30 |
| DBP-Zahl nach ASTM D 2414, ml/100 g | 92 |
| pH-Wert DIN 53 200 | 7,5 |
| Wassergehalt DIN £3 198, % | 0,5 |

Als natürlicher Füllstoff wird ein natürliches Aluminiumsilikat (Clay) mit den folgenden Kenndaten

| | |
|---|---|
| Siebrückstand nach DIN 53 580, 43-μm-Sieb | 0,05 |
| Mittlere Teilchengröße, μm | 2 |
| BET-Oberfläche DIN 66 132 | 30 |
| pH-Wert DIN 53 200 | 5,5 |

verwendet.

Aus diesem Silikat wird eine wäßrige Dispersion mit 35% Feststoffgehalt hergestellt.

In dem in Beispiel 1 beschriebenen Stachelschneckengranulator und bei den dort beschriebenen Einstelldaten des Stachelschneckengranulators werden 30 kg/h Ruß kontinuierlich eingetragen. Hierauf werden 57 kg/h der Dispersion des Aluminiumsilikates aufgesprüht, wobei der Sprühdruck an der Düse 7,5 bar beträgt. Nach Auswurf der nassen Perlen werden diese getrocknet. An dem hierbei entstandenen Mischgranulat mit 60% Ruß und 40% Aluminiumsilikat werden die folgenden physikalisch-chemischen Daten ermittelt:

| | |
|---|---|
| Aschegehalt DIN 53 586, % | 36 |
| pH-Wert DIN 53 200 | 6,1 |
| Schüttgewicht DIN 53 600, g/l | 476 |
| Einzelperlhärte 1,5 mm Perlen, g | 20 |

## Beispiel 7

Ein Mischgranula⁺, hergestellt nach Beispiel 3, wird in einer Kautschukmischung eingesetzt. Die Kautschukmischung hat die folgende Zusammensetzung:

| | Gewichtsteile |
|---|---|
| Naturkautschuk | |
| SMR5, Defo 600 mit 0,2 Rhenacit abgebaut | 80 |
| Polyisoprenkautschuk Cariflex® i R 500 | 20 |
| Mischgranulat — wie beschrieben — | 30 |
| Zinkoxyd RS | 4 |
| Stearinsäure | 1 |

| | |
|---|---|
| Vulcanox 4010 NA | 0,5 |
| Weichmacheröl Naftolen® ZD | 4 |
| Vulcanox HS | 1 |
| Vulcacit DZ | 0,8 |
| Diphenylguanidin | 0,4 |
| Schwefel | 2,5 |
| | 144,2 |

Rhenacit = Plastisizer = Zinksalz von Pentachlorthiophenol
Vulkanox 4010 NA = Alterungsschutz = N'-isopropyl-N'-phenyl-p-phenylendiamin
Vulkanox HS = Alterungsschutz = Poly-2,2,4-trimethyl-1,2-dihydrochinolin
Vulkacit DZ = N-N-dicyclohexyl-2-benzothiazylsulfonamid

Nach einer Vulkanisation bei 145° C ergeben sich folgende Vulkanisatdaten:

| | 17 Minuten Vulkanisation | 34 Minuten Vulkanisation |
|---|---|---|
| Zugfestigkeit, mPa | 20,2 | 16,4 |
| Spannungswert | | |
| 100%, mPa | 1,2 | 1,2 |
| 200%, mPa | 2,8 | 2,7 |
| 300%, mPa | 5,5 | 5,2 |
| Bruchdehnung, % | 630 | 570 |
| Weiterreißwiderstand, kp/cm$^2$ | 15 | 15 |
| Stoßelastizität DIN 53 512 | 66 | 60 |
| Shore A-Härte | 50 | 49 |

Aus diesen Prüfwerten ist bei Vergleich der Spannungswerte für 17 und 34 Minuten Vulkanisation eine ausgezeichnete Reversionsbeständigkeit zu erkennen. Die hohe Bruchdehnung und der gute Weiterreißwiderstand weisen das Mischgranulat als besonders geeignet für dynamisch beanspruchte Kautschukmischungen aus.

**Patentansprüche**

1. Verfahren zur Herstellung von Mischgranulat aus Ruß und hellem silikatischen Füllstoff mittels eines Stachelschneckengranulators, dadurch gekennzeichnet, daß man den hellen silikatischen Füllstoff in Form einer wäßrigen Dispersion kontinuierlich in dem Stachelschneckengranulator auf kontinuierlich zugeführten Ruß aufsprüht, diese Mischung gleichzeitig verperlt und das so erhaltene Mischgranulat trocknet.

2. Kautschukmischung, welche das mittels dem Verfahren gemäß Anspruch 1 erhaltene Mischgranulat als Füllstoff enthält.

**Claims**

1. A process for the production of mixed granulate of carbon black and light silicate-based filler using a barbed screw granulator, characterised in that the light silicate-based filler is continuously sprayed in the form of an aqueous dispersion onto carbon black continuously delivered to the barbed screw granulator, the mixture thus formed is simultaneously converted into bead form and the resulting mixed granulate is dried.

2. A rubber mixture containing as filler the mixed granulate obtained by the process claimed in Claim 1.

22222
# 0 016 863

Die nassen Perlen werden getrocknet.

Die entstandenen Mischgranulate weisen eine Zusammensetzung von 40% Ruß und 60% Natriumaluminiumsilikat und die folgenden physikalisch-chemischen Kenndaten auf:

| | Jod-adsorption nach DIN 53 582 | Asche-gehalt bei 800°C DIN D 53 586 | pH-Wert DIN 53 200 | Schütt-gewicht DIN 53 600 |
|---|---|---|---|---|
| | mg/g | % | | g/l |
| Mischgranulat aus Dispersion A | 31 | 55,4 | 11,0 | 500 |
| Mischgranulat aus Dispersion B | 35 | 55,2 | 10,8 | 516 |

Die Mischgranulate weisen eine ausgezeichnete Rieselfähigkeit auf.

## Beispiel 6

Es wird ein Ruß mit den folgenden physikalisch-chemischen Kenndaten verwendet:

| | |
|---|---|
| Elektronenmikroskopischer Teilchendurchmesser, nm | 50 |
| BET-Oberfläche DIN 66 132, m²/g | 30 |
| DBP-Zahl nach ASTM D 2414, ml/100 g | 92 |
| pH-Wert DIN 53 200 | 7,5 |
| Wassergehalt DIN 53 198, % | 0,5 |

Als natürlicher Füllstoff wird ein natürliches Aluminiumsilikat (Clay) mit den folgenden Kenndaten

| | |
|---|---|
| Siebrückstand nach DIN 53 580, 43-μm-Sieb | 0,05 |
| Mittlere Teilchengröße, μm | 2 |
| BET-Oberfläche DIN 66 132 | 30 |
| pH-Wert DIN 53 200 | 5,5 |

verwendet.

Aus diesem Silikat wird eine wäßrige Dispersion mit 35% Feststoffgehalt hergestellt.

In dem in Beispiel 1 beschriebenen Stachelschneckengranulator und bei den dort beschriebenen Einstelldaten des Stachelschneckengranulators werden 30 kg/h Ruß kontinuierlich eingetragen. Hierauf werden 57 kg/h der Dispersion des Aluminiumsilikates aufgesprüht, wobei der Sprühdruck an der Düse 7,5 bar beträgt. Nach Auswurf der nassen Perlen werden diese getrocknet. An dem hierbei entstandenen Mischgranulat mit 60% Ruß und 40% Aluminiumsilikat werden die folgenden physikalisch-chemischen Daten ermittelt:

| | |
|---|---|
| Aschegehalt DIN 53 586, % | 36 |
| pH-Wert DIN 53 200 | 6,1 |
| Schüttgewicht DIN 53 600, g/l | 476 |
| Einzelperlhärte 1,5 mm Perlen, g | 20 |

## Beispiel 7

Ein Mischgranulat, hergestellt nach Beispiel 3, wird in einer Kautschukmischung eingesetzt.
Die Kautschukmischung hat die folgende Zusammensetzung:

| | Gewichtsteile |
|---|---|
| Naturkautschuk | |
| SMR5, Defo 600 mit 0,2 Rhenacit abgebaut | 80 |
| Polyisoprenkautschuk Cariflex® i R 500 | 20 |
| Mischgranulat — wie beschrieben — | 30 |
| Zinkoxyd RS | 4 |
| Stearinsäure | 1 |

7